# EUROPÄISCHE PATENTSCHRIFT

(11) **EP 2 595 933 B1**
(45) Veröffentlichungstag und Bekanntmachung des Hinweises auf die Patenterteilung: **22.01.2020**
(21) Anmeldenummer: 11743439.9
(22) Anmeldetag: 20.07.2011
(51) Int. Cl.: C03C 17/42, F24C 15/10, B32B 17/06

(54) **SILIKONBESCHICHTUNG ALS VERSIEGELUNGSSCHICHT FÜR EINE DEKORBESCHICHTUNG**
SILICONE COATING AS A SEALING LAYER FOR A DECORATION COATING
REVÊTEMENT DE SILICONE EN TANT QUE COUCHE DE VITRIFICATION POUR UN REVÊTEMENT DÉCORATIF

(30) Priorität: 21.07.2010 DE 102010031866
(43) Veröffentlichungstag der Anmeldung: 29.05.2013
(73) Patentinhaber: Schott AG, 55122 Mainz (DE)
(72) Erfinder: HOFFMANN, Ulf, 64319 Pfungstadt (DE); RUHL, Ella, 55545 Bad Kreuznach (DE); MILANOVSKA, Angelina, 55120 Mainz (DE); BOCKMEYER, Matthias, 55116 Mainz (DE)
(74) Vertreter: Blumbach · Zinngrebe Patentanwälte PartG mbB
(86) Internationale Anmeldenummer: PCT/EP2011/003635
(87) Internationale Veröffentlichungsnummer: WO 2012/010302

(56) Entgegenhaltungen:
- DE-A1-102009 004 784
- FR-A1- 2 868 066
- US-A1- 2009 233 082

## Beschreibung

### Hintergrund der Erfindung

Der Einsatz von pigmentierten Schichten als farbgebende Beschichtung für transparente Glas- oder Glaskeramik-Substrate, die beispielsweise als Unterseitenbeschichtung für Kochflächen Anwendung finden, sind aus dem Stand der Technik bekannt. Häufig werden hier pigmentierte Sol-Gel-Beschichtungen verwendet.

Die farbgebenden Schichten müssen, abhängig vom Einsatz der beschichteten Substrate, bestimmten Anforderungen genügen. Werden sie beispielsweise als Unterseitenbeschichtung für Kochflächen verwendet, müssen sie neben Haftfestigkeit, Kratzfestigkeit, Temperaturstabilität und anderen funktionalen Kriterien ein Mindestmaß an Dichtigkeit gegenüber verschiedensten Medien, die von unten mit der beschichteten Kochfläche in Kontakt kommen können, aufweisen. Farbgebende Dekorschichten auf Sol-Gel-Basis weisen zwar bereits eine gewisse Dichtigkeit auf; diese reicht jedoch bei weitem nicht aus, um die Anforderungen der Hersteller von Kochherden zu erfüllen.

Ein Möglichkeit, eine farbgebende Beschichtung zur erreichen, die den oben genannten Kriterien entspricht und auch eine ausreichende Dichtigkeit erreicht, wird in der Offenlegungsschrift DE 10 2009 004 783 A1 näher beschrieben. Hier wird die Dekorschicht mit einer Versiegelungsschicht, die eine weitere Sol-Gel-Schicht umfasst, abgedeckt. Beide Sol-Gel-Schichten zusammen bilden eine dekorative Beschichtung. Die Zusammensetzung der Versiegelungsschicht kann dem Zusammensetzungsbereich der farbgebenden Dekor-Schicht ähneln oder auch von dieser abweichen.

Dieses Schichtsystem, bestehend aus zwei Sol-Gel-Schichten definierter Zusammensetzung, genügt in vielen Fällen den Anforderungen. Um jedoch die Temperaturbeständigkeits-, Haftfestigkeits- und Dichtigkeitsanforderungen zu erfüllen, können nur bestimmte Pigmente in definierten Mengenverhältnissen verwendet werden.

Eine dekorative Beschichtung von Glas- oder Glaskeramik beschreibt die Druckschrift DE 10 2009 004 784 A1. Die Druckschrift beschreibt eine Dekorschicht und eine hydrophobe Versiegelungsschicht, welche nicht eingebrannt wird, so dass in der Versiegelungsschicht mehr organische Bestandteile verbleiben als in der Dekorschicht, die bei höheren Temperaturen eingebrannt wird. Die zusätzlichen organischen Bestandteile der Versiegelungsschicht führen dazu, dass die Versiegelungsschicht besonders flüssigkeitsabweisende Eigenschaften aufweist.

Die Druckschrift FR 28 68 066 A1 beschreibt eine aus Glas oder Glaskeramik bestehende Platte, welche mit einer farbigen Schicht auf zumindest einer Seite ausgebildet ist, wobei die Schicht anorganische Füllstoffe und Polysiloxan-Harz umfasst.

Die Druckschrift US 2009/233082 A1 beschreibt eine Dekorschicht, welche auf Glas oder Glaskeramik eine verbesserte Temperaturbeständigkeit und Festigkeit aufweist und sich nicht mehr wesentlich festigkeitsmindernd auf das Substrat auswirkt.

Kurzfristige Überhitzungen der Kochfläche können Verfärbungen in der dekorativen Beschichtung hervorrufen. Lösungsmittel aus Klebern oder silikonölhaltige Kontaktmedien können zu unzureichenden Dichtigkeiten führen, so dass z.B. die Klebewülste, mit denen die Kochmulden an den Kochflächen befestigt sind, sichtbar werden. Nur bei ganz bestimmten Matrix-Pigment-Verhältnissen und der Zugabe von Festschmierstoff kann eine hinreichend versiegelnde Wirkung erzielt werden.

Darüber hinaus sind verschiedene Farborte, beispielsweise "schwarz" oder auch sehr helle Farborte, mittels der beschriebenen Pigmentierungen der dekorativen Beschichtung nicht abbildbar. Andere Farborte können nur mit schlechter Farbstabilität und mangelhafter versiegelnder Funktion angeboten werden.

### Beschreibung der Erfindung

Aufgabe der Erfindung ist daher die Bereitstellung von Glas- oder Glaskeramik-Artikeln mit einer dekorativen Beschichtung, wobei die dekorative Beschichtung für die Verwendung als Kochflächen-Unterseitenbeschichtung geeignet ist und eine hohe Dichtigkeit gegenüber Klebern aufweist. Eine weitere Aufgabe der Erfindung ist die Bereitstellung von Glas- oder Glaskeramik-Artikeln mit einer dekorativen Beschichtung, wobei die dekorative Beschichtung als Kochflächen-Unterseitenbeschichtung geeignet ist und gleichzeitig eine ausreichend haltbare Verklebung des Artikels mit einer Kochmulde erlaubt, wobei die Verklebung zumindest das Gewicht der Kochmulde aushält.

Eine weitere Aufgabe der Erfindung ist die Bereitstellung von Glas- oder Glaskeramik-Artikeln, die für die Verwendung von Kochflächen-Unterseitenbeschichtungen geeignet sind, und die Erzeugung von hellen Farborten und dem Farbort "schwarz" erlauben.

Eine weitere Aufgabe der Erfindung ist die Bereitstellung eines Verfahrens zur Herstellung solcher Beschichtungen. Ein erfindungsgemäßer Glas- oder Glaskeramik-Artikel mit einer dekorativen Beschichtung gemäß Anspruch 1 umfasst demgemäß
- eine zumindest teilflächig auf dem Glas- oder Glaskeramik-Substrat aufgebrachte Dekorschicht und eine zumindest auf Teilbereichen der Dekorschicht und/oder dem Glas- oder Glaskeramik-Substrat aufgebrachte Versiegelungsschicht, wobei
- die Dekorschicht eine ausgehärtete Sol-Gel-Beschichtung mit anorganischen Feststoff-Partikeln und die Versiegelungsschicht eine ausgehärtete Beschichtung auf Silikon-Basis mit anorganischen Feststoff-Partikeln umfasst, und wobei
- die anorganischen Feststoff-Partikel Pigment-Partikel und/oder Füllstoffe und/oder Festschmierstoff umfassen.

Ein erfindungsgemäßes Verfahren zur Herstellung eines Glas- oder Glaskeramik-Artikels mit dekorativer Beschichtung gemäß Anspruch 7, umfassend eine Dekorschicht und eine Versiegelungsschicht, umfasst demgemäß zumindest folgende Schritte:
Zunächst wird eine Dekorschicht auf Sol-Gel-Basis auf ein Glas- oder Glaskeramik-Substrat aufgebracht, wobei einem Sol anorganische Feststoff-Partikel zugegeben werden, die Mischung aus dem Sol und den anorganischen Feststoff-Partikeln zumindest teilflächig auf das Glas- oder Glaskeramik-Substrat aufgebracht und unter Ausbildung einer Dekorschicht ausgehärtet wird. Anschließend wird die Versiegelungsschicht zumindest auf Teilbereiche der Dekorschicht und/oder des Glas- oder Glaskeramik-Substrats aufgebracht, wobei einer Beschichtungslösung auf Silikon-Basis Feststoff-Partikel zugegeben werden, die entstandene Mischung auf das mit der Dekorschicht beschichtete Glas- oder Glaskeramik-Substrat aufgebracht und ausgehärtet wird. Die anorganischen Feststoff-Partikel, die den Beschichtungslösungen zugegeben werden, umfassen gemäß einer bevorzugten Ausführungsform Pigment-Partikel und/oder Füllstoffe und/oder Festschmierstoff.

Die Erfinder haben überraschend festgestellt, dass eine Versiegelungsschicht auf Silikon-Basis, in diesem Dokument auch Silikonbeschichtung genannt, die anorganische Feststoff-Partikel enthält, nicht nur die Anforderungen einer Kochflächen-Unterseitenbeschichtung hinsichtlich Temperaturbeständigkeit, Haftfestigkeit, Kratzfestigkeit und Dichtigkeit erfüllt, sondern auch die notwendige Verklebbarkeit mit einer Kochmulde ermöglicht. Anders ausgedrückt bedeutet dies, dass die Kochmulde an die Unterseite der mit der Silikonbeschichtung versehenen Kochfläche geklebt werden kann, wobei die Verklebung eine Festigkeit aufweist, die zumindest das Gewicht der Kochmulde aushält ohne sich zu lösen.

Gerade dies ist jedoch in Bezug auf Silikonbeschichtungen nicht trivial, da Klebstoffe - auch Silikon-Kleber - im Allgemeinen nicht oder jedenfalls hinsichtlich des Gewichts einer Kochmulde nur unzureichend auf Silikon haften. Gleichzeitig muss jedoch auch sichergestellt sein, dass eine solche Verklebung beim Blick auf die Kochfläche nicht sichtbar ist. Um dies zu gewährleisten, sollte die Kochflächen-Unterseitenbeschichtung dicht gegenüber Kontaktmedien im Allgemeinen und insbesondere dicht gegenüber den verwendeten Klebematerialien sein. Gerade diese Kombination der besonderen Dichtigkeit der Silikonbeschichtung gegen Klebstoffe bei trotzdem ausreichender Verklebbarkeit macht diese Beschichtung insbesondere für die Verwendung auf Kochflächen-Unterseiten so interessant.

Darüber hinaus ist eine solche Silikonbeschichtung vorteilhafterweise auch dicht gegenüber anderen Kontaktmedien wie Leitpasten, Dichtungsbänder, Nahrungsmittelrückständen, die beim Kochen entstehen können oder auch gegenüber aggressiven Stoffen, die beispielsweise bei einer Beheizung mittels Gasbrennern entstehen können.

Erfindungsgemäß wird unter einer Schicht im Allgemeinen oder einer dekorativen Beschichtung im Besonderen mit guter Haftfestigkeit verstanden, dass bei einem Klebebandtest in Anlehnung an DIN 58196-6 keine Ablösung der Schicht erfolgt. Es werden dabei unterschiedlich vorkonditionierte Testproben eingesetzt (z.B. nach Einbrennen, nach Wasserdampfbelastung, Abschrecken, o.ä.). Alternativ kann ein Crockmetertest in Anlehnung an DIN 58196-5 durchgeführt werden, wobei es wiederum zu keiner Ablösung der Schicht kommen soll.

Allgemein kann innerhalb des erfindungsgemäßen Zusammensetzungsbereichs eine ausgehärtete dekorative Beschichtung eine Abriebbeständigkeit zumindest gemäß Kategorie 2 nach DIN 58196-6 aufweisen. Eine leichte Polierwirkung durch lokale Glättung der Schicht ist jedoch zulässig.

Die Kratzfestigkeit wird mittels eines Kratztests mit einer Wolframcarbidspitze mit 0,75 mm Durchmesser und unterschiedlichen Auflagegewichten bestimmt. Eine gute Kratzfestigkeit ist im Sinne der Erfindung dann gegeben, wenn bei einem Auflagegewicht von 500 g, bevorzugt 800g keine störend visuelle Schädigung des Schichtverbundes erkennbar ist. Bewertet wird die Probe durch das Substrat hindurch.

Eine gute Dichtigkeit wird, entsprechend der einwirkenden Stoffe, anhand der folgenden Tests definiert und bezieht sich auf ein Schichtpaket, das eine Dekorschicht und eine Versiegelungsschicht umfasst.

Die Dichtigkeit der Beschichtung gegenüber wässrigen und öligen Medien sowie Reinigungsmitteln wird mittels eines Tropfen-Tests definiert. Ein Tropfen der zu testenden Flüssigkeit wird auf die Unterseitenbeschichtung aufgebracht und Mediums-spezifisch unterschiedlich lange einwirken gelassen. Wassertropfen werden nach 30 Sekunden, Öltropfen nach 24 Stunden, Reinigungsmitteltropfen nach Einwirkung abgewischt. Anschließend wird der Glas- oder Glaskeramik-Artikel von oben durch das Substrat begutachtet. Der Tropfen bzw. der Schatten des Tropfens darf nicht sichtbar sein. Eine Durchdringung der Schicht mit dem aufgebrachten Medium ist unzulässig. Der Wassertropfen-Test wird darüber hinaus an Proben mit unterschiedlicher Vorkonditionierung durchgeführt: im Anlieferungszustand, nach Temperung, nach Abschrecken, nach Wasserdampfbelastung, usw.

Bei einem weiteren Test bezüglich der Dichtigkeit gegenüber öligen Medien wird eine Schnittkante der Beschichtung in Öl gestellt, wobei die Einwirkzeit zwischen einer und fünf Minuten variiert. Öl darf nicht in der Schicht nach oben kriechen.

Die Dichtigkeit gegenüber Kleber wird bestimmt, indem eine Klebewulst auf die Beschichtung aufgebracht und dort ausgehärtet wird. Gegebenenfalls werden verschiedene Temperungen der so präparierten Proben durchgeführt. Anschließend wird der Glas- oder Glaskeramik-Artikel von oben durch das Substrat hindurch begutachtet. Die Klebewulst bzw. ihr Schatten darf nicht sichtbar sein.

Die Dichtigkeit gegenüber Dichtmaterialien wird analog ausgeführt, jedoch ohne den Schritt der Aushärtung. Die Dichtmaterialien bzw. ein Schatten, der aus der Ausgasung der Dichtmaterialien resultiert, darf nicht sichtbar sein.

Im Allgemeinen besteht eine erfindungsgemäße dekorative Beschichtung, also ein Schichtverbund aus Dekorschicht und Versiegelungsschicht zumindest einen der vorstehend genannten Dichtigkeitstests.

Gemäß einer besonders bevorzugten Ausführungsform der Erfindung umfasst die Dekorschicht als ausgehärtetes Sol-Gel-Bindemittel ein Metalloxid- oder ein Halbmetalloxid-Netzwerk, bevorzugt ein SiO₂-Netzwerk. Das Netzwerk enthält anorganische Partikel in einem Verhältnis der Gewichtsprozente von Pigment-Partikeln und/oder Füllstoff zu Festschmierstoff zwischen 10:1 bis 1:1, bevorzugt zwischen 3:1 und 1:1 und besonders bevorzugt zwischen 3:1 und 1,5:1.

Dieses Verhältnis zwischen Pigmenten und Füllstoffen zu Festschmierstoffen ermöglicht Sol-Gel-Beschichtungen, die vergleichsweise dicht und kratzfest sind. Insbesondere weisen solche Dekorschichten jedoch eine gute Haftfestigkeit zum Substrat auf.

Gemäß einer weiteren bevorzugten Ausführungsform umfasst die Dekorschicht als Festschmierstoff Graphit und/oder α-Bornitrid und/oder Molybdän-Sulfid und/oder ein Material, dessen Oberflächenenergie höchstens 20% höher als die Oberflächenenergie von Graphit ist.

Wird Graphit als Festschmierstoff verwendet, weist dieser vorzugsweise Korngrößen zwischen 6 und 30 µm auf; wird α-Bornitrid als Festschmierstoff verwendet, weist dieser bevorzugt eine durchschnittliche Partikelgröße zwischen 1 und 100 µm, insbesondere bevorzugt zwischen 3 und 20 µm auf.

Besonders geeignete Pigment-Partikel für die Dekorschicht umfassen die folgenden Materialien: (Cr, Fe)(Ni, Mn)-Spinelle und/oder (Fe, Mn)₂O₃ und/oder (Fe, Mn) (Fe, Mn)O₄ und/oder CuCr₂O₄ und/oder (Ni, Fe) (Cr, Fe)₂O₄. Vorzugsweise weisen diese Pigment-Partikel Korn- oder Agglomeratgrößen < 3 µm, bevorzugt < 2 µm und insbesondere bevorzugt < 1 µm auf.

Um farbige Farborte zu realisieren, können auch CoAl-, CoCrAl-, CoCrMgTiZnAl-, CoNiZnTi-, NiSbTi-, CrSbTi-, FeAlTi-basierte Pigmente eingesetzt werden.

Eine Dekorschicht auf Sol-Gel-Basis kann beispielsweise wie folgt hergestellt werden. Zunächst wird ein dem Fachmann bekanntes Sol erzeugt und mit anorganischen Feststoff-Partikeln versetzt. Die entstandene Sol-Gel-Mischung wird dann auf ein Glas- oder Glaskeramik-Substrat aufgebracht. Die so erzeugte Beschichtung kann dann, vorzugsweise bei 100 bis 250°C, getrocknet werden. Durch die Trocknung bildet sich ein amorphes Xerogelnetzwerk mit einem, vorzugsweise SiO₂-basierten, Metalloxid-Netzwerk. Anschließend kann das beschichtete Substrat, vorzugsweise bei Temperaturen > 350°C, eingebrannt oder ausgehärtet werden. Beim Einbrennen spalten sich organische Restbestandteile wie Alkohol oder aliphatische Gruppen vom amorphen Sol-Gel-Bindemittel unter Bildung des festen Metalloxid-Gerüsts, insbesondere eines SiO₂- oder organisch modifizierten SiO₂-Gerüsts, ab. In einer besonders bevorzugten Ausführungsform werden die beiden Verfahrensschritte des Trocknens und Einbrennens in einem Prozess kombiniert, z.B. unter Verwendung eines Rollenofens.

Die Versiegelungsschicht umfasst eine Silikon-basierte Schicht. Unter einer Silikon-basierten Schicht wird im Rahmen dieses Dokuments eine Schicht verstanden, die zum einen Silizium-Sauerstoffbindungen, sogenannte Siloxan- oder Polysiloxan-Bindungen und andererseits auch Silizium-Kohlenstoff-Bindungen, mit denen organische Gruppen an das anorganische Grundgerüst gebunden sind, aufweisen.

Gemäß einer besonders bevorzugten Weiterbildung der Erfindung umfasst die Versiegelungsschicht eine Polysiloxan-Beschichtung. Besonders bevorzugt handelt es sich dabei um eine methylbasierte Polysiloxan-Beschichtung und insbesondere bevorzugt um eine Polydimethylsiloxan-Beschichtung. Diese Beschichtungen haben den Vorteil, dass handelsübliche Materialien verwendet werden können, die vorzugsweise sogar als Einkomponenten-Systeme erhältlich sind. Dies hat den Vorteil einer sehr einfachen und schnellen Herstellung solcher Beschichtungen.

Gemäß einer weiteren Ausführungsform der Erfindung kann die Versiegelungsschicht auch eine Polysilsesquioxan umfassende Schicht sein, wobei die organischen Reste bevorzugt Ethoxy- und/oder Hydroxy-Gruppen sind. Natürlich sind auch Mischschichten aus Polysiloxanen und Polysilsequioxanen als Versiegelungsschicht-Materialien denkbar.

Bevorzugt wird die so erzeugte Versiegelungsschicht durch Trocknen bei Temperaturen größer 200°C durchgeführt. Wird die Trocknung bei Temperaturen unterhalb von 200°C durchgeführt, besteht die Gefahr, dass die erzielten Haftfestigkeiten für die Verwendung als Kochflächen-Unterseitenbeschichtung nicht ausreichend sind. Dies schließt jedoch nicht aus, dass eine Trocknung für andere Anwendungsbereiche, in denen es nicht so sehr auf die Haftfestigkeit der Beschichtung ankommt, eine Trocknung bei Temperaturen unter 200°C ausreichend sein kann. Bevorzugt wird die Versiegelungsschicht bei Temperaturen zwischen 250 und 330°C ausgehärtet oder getrocknet. Insbesondere bevorzugt beträgt die Aushärtungstemperatur zumindest 270°C.

Eine Ausführungsform sieht vor, dass die Versiegelungsschicht als Pigment-Partikel Schwarzpigmente, insbesondere Spinelle und/oder Effektpigmente, insbesondere plättchenförmige Pigmente, welche eine erhöhte Sperrschutzwirkung der Versiegelungsschicht erzielen, umfasst.

Die innere Porosität der pigmentierten Versiegelungsschicht beträgt <30m²/g, besonders bevorzugt <20m²/g, insbesondere bevorzugt <10m²/g.

Die Schwarzpigmente können bevorzugt (Cr,Fe)(Ni,Mn)-Spinell und/oder Cu(Cr,Fe,Mn)₂O₄ -Spinell und/oder Co(Cr,Fe)₂O₄ und/oder (Ni,Fe) (Cr,Fe)O₄ -Spinell und/oder (Fe,Mn)₂O₃ und/oder (Fe,Mn) (Fe,Mn)₂O₄ -Spinell enthalten. Mittels dieser Pigmente sind dunkle und schwarze Versiegelungsschichten herstellbar. Bevorzugte mittlere Korngrößen liegen im Bereich von d₅₀ = 0,1 bis 5 µm, besonders bevorzugt von d₅₀ = 0,1 bis 1 µm.

Bei den Effektpigmenten kann es sich vorteilhaft um Glimmer, Glasflakes, beschichteten Glimmer oder beschichtete Glasflakes, beispielsweise mit SiO₂/TiO₂ oder SiO₂/TiO₂/SnO₂ oder SiO₂/TiO₂/Fe₂O₃ vergütetes Effektpigment, handeln. Vorzugsweise ist der Durchmesser der verwendeten Effektpigmente kleiner 200 µm, besonders bevorzugt kleiner 100 µm, insbesondere bevorzugt kleiner 60 µm. Neben dem Erzeugen von bestimmten Effekten, wie beispielsweise Farbchargierungen, ermöglichen die Effektpigmente insbesondere auch die Herstellung von Versiegelungsschichten mit hellen Farborten.

Gemäß noch einer bevorzugten Weiterbildung der Erfindung umfasst die Versiegelungsschicht als Festschmierstoff Graphit und/oder Bornitrid und/oder Molybdänsulfid.

Eine weitere Ausführungsform sieht vor, dass die Versiegelungsschicht als Pigment-Partikel Weißpigmente, insbesondere TiO₂-Rutile, plättchenförmig und/oder sphärisch an Stelle der bereits genannten Schwarzpigmente enthält.

Die Weißpigmente beinhalten bevorzugt TiO2-Rutile, welche ggf. mit einer SiO₂- oder Al₂O₃-Beschichtung vergütet sind. Mittels dieser Pigmente sind helle und weiße Versiegelungsschichten herstellbar. Bevorzugte mittlere Korngrößen liegen im Bereich von d₅₀ = 0,1 bis 20 µm, besonders bevorzugt von d₅₀ = 5 bis 20 µm.

Die Versiegelungsschicht weist einen Anteil von anorganischer Feststoff-Partikeln am Gesamtgewicht der Versiegelungsschicht auf, der zwischen 10 und 70 Gew.-%, bevorzugt zwischen 20 und 50 Gew.-% und besonders bevorzugt zwischen 30 und 40 Gew.-% liegt, wobei die Feststoff-Partikel zumindest die Pigment-Partikel umfassen. Ein bestimmter Anteil an anorganischen Feststoff-Partikeln ermöglicht zum einen vorteilhaft die Herstellung von deckenden oder blickdichten Versiegelungsschichten schon bei geringen Schichtdicken und erhöht andererseits die Haftfestigkeit der Schicht, insbesondere in Bezug auf Verklebungen.

Durch die Auswahl von entsprechenden Pigment- und Festschmierstoffen ist vorteilhaft die Herstellung von Farborten möglich, die bislang nur annähernd oder nicht ausreichend temperaturstabil hergestellt werden konnten. So können gemäß einer besonders bevorzugten Ausführungsform der Erfindung Versiegelungsschichten hergestellt werden, die im Schichtverbund mit der farbgebenden Schicht einen sehr dunklen Farbort, insbesondere die Farbe Schwarz, die einen L*-Wert zwischen 2 und 30, bevorzugt zwischen 2 und 25 und besonders bevorzugt zwischen 2 und 20 aufweisen, oder auch Versiegelungsschichten, die im Schichtverbund mit der farbgebenden Schicht einen sehr hellen Farbort mit L*-Werten zwischen 65 und 98, bevorzugt zwischen 70 und 98 und besonders bevorzugt zwischen 80 und 98 aufweisen, wobei die Farborte durch das Glas- oder Glaskeramik-Substrat hindurch gemessen werden. Diese Farborte können mit den bislang bekannten Versiegelungssystemen nicht oder nur qualitativ unzureichend dargestellt werden, da gerade bei diesen Farbgebungen leichte Farbveränderungen durch beispielsweise Überhitzung auftreten können und die versiegelnde Wirkung bei bestimmten Kontaktmaterialien eingeschränkt ist.

Natürlich können auch andere, dem Fachmann bekannte, Pigmente verwendet werden, um alle möglichen Farborte zu erzielen. Voraussetzung ist jedoch, dass die Verwendung dieser Pigmente nicht zu ungenügenden Haft- und Klebefestigkeiten der Versiegelungsschicht führt.

Ein weiterer Vorteil solcher Silikonbeschichtungen besteht darin, dass bei bekannten Dekorschichten, insbesondere bei solchen auf Sol-Gel-Basis, thermisch induzierte Farbortverschiebungen soweit gemindert werden können, dass sie für das Auge nicht oder zumindest nicht auffällig sichtbar werden. Dies trifft insbesondere auf Farbortverschiebungen durch kurzzeitige Überhitzungsereignisse zu. Daher weist eine dekorative Beschichtung bevorzugt einen temperaturstabilen Farbort L_{ab} auf, der sich um nicht mehr als 1 verändert, d.h. ΔL < 1, wenn der Glas- oder Glaskeramik-Artikel Temperaturen von maximal 450°C für maximal 5 Minuten ausgesetzt wird. Die Farbveränderung, d.h. die Farborte vor und nach der Veränderung, werden dabei durch das Glas- oder Glaskeramik-Substrat hindurch bestimmt.

Ein Glas- und insbesondere ein Glaskeramik-Artikel, wie vorstehend beschrieben, kann vorteilhaft als Kochfläche verwendet werden, wobei die dekorative Beschichtung insbesondere auf der Unterseite der Kochfläche aufgebracht ist. Dabei bedeckt die Versiegelungsschicht vorzugsweise zumindest die Randbereiche und/oder zumindest die nicht beheizten Bereiche der Kochfläche. Aber auch die Heizzonen können vorteilhaft mit einer Versiegelungsschicht versehen sein. Dies ist aufgrund der guten Verklebbarkeit und der Temperaturbeständigkeit der Versiegelungsschicht vorteilhaft möglich.

### Detaillierte Beschreibung der Erfindung

Im Folgenden wird die Erfindung im Detail anhand von Ausführungsbeispielen näher erläutert. Gleiche Bezugszeichen in unterschiedlichen Abbildungen beziehen sich auf gleiche oder ähnliche Merkmale.

Es zeigen:
- Fig. 1:: schematischer Querschnitt durch einen Glas- oder Glaskeramik-Artikel mit einer dekorativen Beschichtung,
- Fig. 2:: Aufsicht auf eine Kochfläche, umfassend einen Glas- oder Glaskeramik-Artikel mit dekorativer Beschichtung.

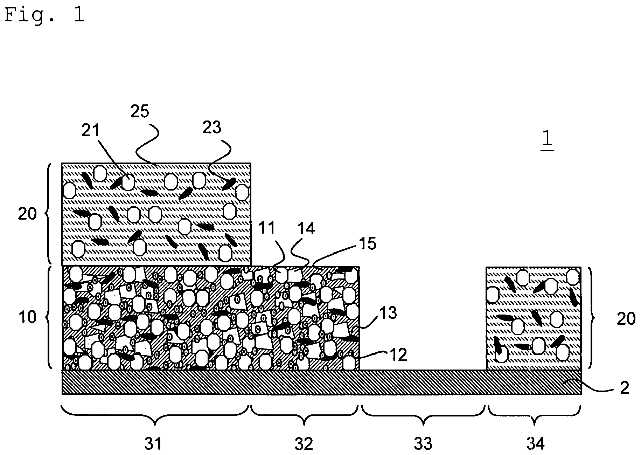

In Fig. 1 ist ein schematischer Querschnitt durch einen erfindungsgemäßen Glas- oder Glaskeramik-Artikel 1 dargestellt. Der Glas- oder Glaskeramik-Artikel 1 weist ein Glas- oder Glaskeramik-Substrat 2 mit einer dekorativen Beschichtung, umfassend eine Dekor- 10 und eine Versiegelungsschicht 20, auf. Sowohl die Dekorschicht 10 als auch die Versiegelungsschicht 20 enthalten anorganische Feststoff-Partikel. Als Substrate können Glassubstrate, beispielsweise aus Borosilikatglas, oder Glaskeramiken, wie beispielsweise Lithium-Aluminosilkat-Glaskeramiken, verwendet werden.

Gemäß einer besonders bevorzugten Ausführungsform der Erfindung umfasst die Dekorschicht 10 als anorganische Feststoff-Partikel Pigment-Partikel 11, Füllstoffe 12 sowie Festschmierstoff 13, die in einer Sol-Gel-Matrix 15, einem Metall- oder Halbmetall-Netzwerk, eingebettet sind. Darüber hinaus zeigt die Dekorschicht 10 Poren 14.

Die Versiegelungsschicht 20 umfasst in dieser Ausführungsform Pigment-Partikel 21 sowie Festschmierstoff 23, die in eine Silikon-basierte Matrix 25 eingebettet oder eingebunden sind. Im Gegensatz zur Dekorschicht 10 weist die Versiegelungsschicht 20 so gut wie keine Porosität auf, was ein wesentlicher Faktor für ihre Dichtigkeit gegenüber Kontaktmedien ist.

Gemäß einer besonders bevorzugten Ausführungsform werden zur Herstellung der Dekorschicht 10 Pigment-Partikel 11 und/oder Füllstoffe 12 und Festschmierstoff 13 mit einem Sol vermischt, die Mischung vorzugsweise mittels Siebdruck als Schicht auf das Substrat 2 aufgetragen, bei Temperaturen zwischen 100°C und 250°C getrocknet und bei Temperaturen über 350°C eingebrannt.

Die anorganischen Feststoff-Partikel 11, 12, 13 werden dem Sol der Dekorschicht 10 in einem Massenverhältnis Pigment-Partikel 11 und/oder Füllstoffe 12 zu Festschmierstoff 13 von 10:1 bis 1:1, bevorzugt von 3:1 bis 1:1, besonders bevorzugt von 3:1 bis 1,5:1 zugegeben. Als Pigment-Partikel können nicht-plättchenförmige oder plättchenförmige Pigment-Partikel enthalten sein.

Als nicht-plättchenförmige Pigment-Partikel werden für dunkle Farborte bevorzugt körnige und/oder stängelige und/oder stäbchenförmige Pigmente wie beispielsweise (Cr, Fe) (Ni, Mn)-Spinelle und/oder (Fe, Mn)₂O₃ und/oder (Fe, Mn) (Fe, Mn)O₄ und/oder CuCr₂O₄ und/oder (Ni, Fe) (Cr, Fe)₂O₄ eingesetzt. Um farbige Farborte zu realisieren, können auch CoAl, CoCrAl, CoCrMgTiZnAl, CoNiZnTi, NiSbTi, CrSbTi, FeAlTi-basierte Pigmente eingesetzt werden. Leicht dispergierbare Pigmente, welche mit einer dünnen, typischerweise weniger als 100 nm dicken, anorganischen Beschichtung versehen sind, werden bevorzugt verwendet.

Als plättchenförmige Pigment-Partikel können beispielsweise Effektpigmente, wie Glimmer oder Glasflakes zugegeben werden. Gut geeignet ist plättchenförmiger Glimmer, der beispielsweise mit SiO₂/TiO₂ oder SiO₂/TiO₂/SnO₂ oder SiO₂/TiO₂/Fe₂O₃ vergütet ist. Vorzugsweise weisen die plättchenförmigen Pigmente Durchmesser kleiner 200 µm, besonders bevorzugt kleiner 100 µm, insbesondere bevorzugt kleiner 60 µm auf.

Als Festschmierstoff 13 kann Graphit und/oder α-Bornitrid und/oder Molybdän-Sulfid und/oder ein Material, dessen Oberflächenenergie höchstens 20% höher als die Oberflächenenergie von Graphit ist, für die Herstellung der Dekorschicht 10 verwendet werden.

Neben den Pigment-Partikeln 11 können in der Dekorschicht 10 auch noch Füllstoff-Partikel 12 enthalten sein. Es ist auch möglich, dass ausschließlich Füllstoffe 12 und keine Pigment-Partikel 11 zusammen mit dem Festschmierstoff 13 enthalten sind.

Die Pigment-Partikel 11 und/oder die Füllstoff-Partikel 12 und der Festschmierstoff 13 werden durch ein Sol-Gel-Bindemittel 15 zu einer festen Schicht verbunden, wobei der Gewichtsanteil der anorganischen Feststoff-Partikel 11, 12, 13 bevorzugt höher als der Gewichtsanteil des verfestigten und ausgehärteten Sol-Gel-Bindemittels ist. Bevorzugt beträgt bei einer wie in Fig. 1 gezeigten Dekorschicht 10 dabei der Anteil von Sol-Gel-Bindemittel 15 höchstens 40 Gew.-%, oder auch nur höchstens 30 Gew.-% der Gesamtmasse der Dekorschicht 10.

Durch den hohen Feststoff-Anteil bzw. durch den geringen Anteil von Sol-Gel-Bindemittel bleiben Poren 14 bestehen. Die insgesamt mikro- und/oder mesoporöse Schicht ist vergleichsweise flexibel, so dass Unterschiede der Temperaturausdehnungskoeffizienten von Substrat 2 und Dekorschicht 10 ausgeglichen werden können. Als mikroporöse Schichten werden allgemein nach der IUPAC-Definition Schichten verstanden, deren Porendurchmesser im Durchschnitt kleiner 2 nm ist. Bei mesoporösen Schichten liegt gemäß der Definition der IUPAC-Definition der Porendurchmesser im Durchschnitt bei 2 bis 50 nm.

Ein gelförmiges Sol-Gel-Bindemittel kann beispielsweise wie folgt dargestellt werden:
Eine Mischung aus Tetraethoxyorthosilan (TEOS) und Triethoxymethylsilan (TEMS) wird hergestellt, wobei Alkohol als Lösungsmittel zugegeben werden kann. Eine wässrige Metalloxid-Dispersion, insbesondere eine SiO₂-Dispersion in Form von kolloiddispersen SiO₂-Partikel, wird mit Säure, vorzugsweise Salzsäure oder einer anderen Mineralsäure wie Schwefelsäure, gemischt. Die beiden getrennt hergestellten Mischungen können für eine verbesserte Homogenisierung gerührt werden. Anschließend werden die beiden Mischungen zusammengegeben und vermischt. Vorteilhaft kann diese Mischung, vorzugsweise unter ständigem Rühren, für beispielsweise eine Stunde reifen. Parallel zum Ansatz dieser Mischung können die Pigment-Partikel 11 und/oder die Füllstoffe 12 und die Festschmierstoff-Partikel 13 abgewogen, der reifenden Mischung zugegeben und dispergiert werden. Als Füllstoff kann beispielsweise pyrogene Kieselsäure zugegeben werden. Die pyrogene Kieselsäure und/oder die kolloiddale SiO₂-Dispersion liefern die kugelförmigen Füllstoffpartikel 12 für die fertige Dekorschicht 10.

In Abhängigkeit von der vorgesehen Art des Auftragens auf das Substrat können unterschiedliche Lösungsmittel, Rheologieadditive und andere Zusatzstoffe der Mischung zugegeben werden. Die Dekorschicht 10 kann grundsätzlich mittels aller dem Fachmann bekannten Verfahren auf das Glas- oder Glaskeramik-Substrat 2 aufgebracht werden.

Das Sol wandelt sich durch Verflüchtigung des Alkohols und durch Polykondensation des hydrolysierten TEOS und TEMS in ein Metalloxid-Xerogelnetzwerk um. Dieser Prozess wird nach dem Auftrag der Mischung auf das Substrat 2 durch Trocknen bei Temperaturen zwischen 100 und 250°C beschleunigt, so dass sich die aufgetragene Schicht unter Ausbildung des Xerogels verfestigt. Werden beispielsweise TEOS und/oder TEMS als Edukte verwendet, entsteht ein SiO₂-Netzwerk, insbesondere auch ein zumindest teilweise methyl- und ethoxy-substituiertes SiO₂-Netzwerk. Das sich anschließende Einbrennen der getrockneten Schicht bei Temperaturen von vorzugsweise > 350°C schließt die Reaktion zum SiO₂-Netzwerk ab und führt zu einer Verdichtung der so erzeugten Dekorschicht 10.

Bei dem in Fig. 1 dargestellten Ausführungsbeispiel ist die Dekorschicht 10 teilweise mit einer Versiegelungsschicht 20 abgedeckt. Dieser Bereich ist mit dem Bezugszeichen 31 gekennzeichnet. Teilweise liegt jedoch die Versiegelungsschicht 20 auch direkt auf dem Glas- oder Glaskeramik-Substrat 2 auf, ohne dass sich zwischen Versiegelungsschicht 20 und Substrat 2 eine Dekorschicht 10 befindet. Dieser Bereich ist mit dem Bezugszeichen 34 gekennzeichnet.

Gemäß einer besonders bevorzugten Ausführungsform der Erfindung umfasst ein Glas- oder Glaskeramik-Artikel mit einer dekorativen Beschichtung sowohl Bereiche, in denen auf das Substrat 2 eine Dekorschicht 10 und eine Versiegelungsschicht 20 aufgebracht sind, siehe Bereich 31, als auch Bereiche, in denen auf dem Substrat 2 nur eine Versiegelungsschicht 20, siehe Bereich 34, oder nur eine Dekorschicht 10, siehe Bereich 32, aufgebracht sind. Der Glas- oder Glaskeramik-Artikel kann neben beschichteten Bereichen auch Bereiche umfassen, die gar keine dekorative Beschichtung aufweisen, siehe Bereich 33.

Insbesondere bevorzugt bedeckt die Versiegelungsschicht bei Kochflächen-Unterseitenbeschichtungen die kalten Bereiche der Kochfläche und/oder die Randbereiche der Kochfläche. An diesen Randbereichen wird die Kochfläche mit der Kochmulde verklebt, wobei die Verklebung durch die Kochfläche hindurch nicht sichtbar sein soll. Aus diesem Grund muss die Beschichtung in diesem Bereich zum einen so haftfest sein, dass sie das Gewicht der Kochmulde tragen kann. Zum anderen darf die Verklebung nicht in die Beschichtung eindringen, so dass Verfärbungen durch die Kochfläche hindurch nach oben sichtbar sind. Da die ausgehärtete Silikonbeschichtung mit den Pigment-Partikeln der Versiegelungsschicht 20 überraschend die notwendige Haftfestigkeit und auch die notwendige Dichtigkeit aufweist, bedeckt sie bevorzugt diese Randbereiche.

Die Versiegelungsschicht 20 umfasste eine ausgehärtete Silikonbeschichtung mit anorganischen Feststoffpartikeln. Vorzugsweise umfasst die Versiegelungsschicht 20 eine Polysiloxan-Beschichtung, bevorzugt eine methylbasierte Polysiloxan-Beschichtung und insbesondere bevorzugt eine Polydimethylsiloxan-Beschichtung mit anorganischen Feststoff-Partikeln.

Gemäß einer weiteren bevorzugten Ausführungsform der Erfindung kann die Versiegelungsschicht 20 auch eine Polysilsesquioxan umfassende Schicht sein, wobei die organischen Reste bevorzugt Ethoxy- und/oder Hydroxy-Gruppen sind. Natürlich kann die Versiegelungsschicht 20 auch eine Beschichtung aus einer Mischung von Polysiloxan und Polysilsesquioxan umfassen.

Als anorganische Feststoff-Partikel können wie bei der Dekorschicht 10 Pigment-Partikel 21 und/oder Füllstoffe und/oder Festschmierstoff 23 enthalten sein. In dem in Fig. 1 dargestellten Beispiel umfasst die Versiegelungsschicht 20 Pigment-Partikel 21 und Festschmierstoff 23.

Grundsätzlich kann die Versiegelungsschicht 20 als Pigment-Partikel 21 Schwarzpigmente, insbesondere Spinelle und/oder Effektpigmente, insbesondere plättchenförmige Pigmente, umfassen. Als Schwarzpigmente können bevorzugt (Cr,Fe) (Ni,Mn)-Spinell und/oder (Fe,Mn)₂O₃ und/oder (Fe,Mn) (Fe,Mn)O₄ verwendet werden. Als plättchenförmige Pigmente und Festschmierstoff 23 können grundsätzlich die für die Dekorschicht 10 beschriebenen plättchenförmigen Pigmente und Festschmierstoffe verwendet werden.

Besonders bevorzugt liegt der Anteil der anorganischen Feststoff-Partikel in der Versiegelungsschicht 20, umfassend zumindest die Pigment-Partikel, zumindest zwischen 10 und 70 Gew.-%, bevorzugt zwischen 20 und 50 Gew.-% und besonders bevorzugt zumindest zwischen 30 und 40 Gew.-% des Gesamtgewichts der Versiegelungsschicht 20.

Ein besonderer Vorteil einer Silikon-basierten Versiegelungsschicht wie oben beschrieben, liegt darin, dass besonders helle und besonders dunkle Farborte, die bislang nicht oder nicht in ausreichender Qualität herstellbar waren, in guter Qualität realisiert werden können. Gemäß einer besonders bevorzugten Ausführungsform weist daher die dekorative Beschichtung einen L*-Wert zwischen 2 und 30, bevorzugt zwischen 2 und 25 und besonders bevorzugt zwischen 2 und 20 oder einen L*-Wert zwischen 65 und 98, bevorzugt zwischen 70 und 98 und besonders bevorzugt zwischen 80 und 98 auf, wobei die Farborte durch das Glas- oder Glaskeramik-Substrat gemessen werden.

Gemäß einer weiteren bevorzugten Ausführungsform der Erfindung ist der Farbort einer solchen dekorativen Beschichtung auch während kurzzeitigen Überhitzungen stabil, was insbesondere für die Verwendung als Kochfläche ein wesentliches Qualitätsmerkmal darstellt. Besonders bei hellen Farborten sind schon geringe Farbveränderungen für den Betrachter sichtbar und damit störend. Dekorative Sol-Gel-Beschichtungen weisen in diesem Zusammenhang den Nachteil auf, dass bei Überhitzung noch vorhandene organische Bestandteile verbrennen, aber nicht entweichen können. Es kommt dann häufig zu einer bräunlichen Verfärbung im Bereich der Überhitzung.

Eine dekorative Beschichtung weist daher bevorzugt einen temperaturstabilen Farbort L_{ab} auf, der sich um nicht mehr als 1 verändert, d.h. ΔL < 1, wenn der Glas- oder Glaskeramik-Artikel Temperaturen von maximal 450°C für maximal 5 Minuten ausgesetzt wird.

Werden Silikon-basierte Versiegelungsschichten überhitzt, kann es maximal zu einer Verkieselung einer solchen Beschichtung kommen. Eine Verkieselung führt zu einer geringfügigen Aufhellung des Farborts, die aber für den Betrachter eher nicht ins Auge fällt.

Um eine nachträgliche Farbveränderung der Versiegelungsschicht 20 zu vermeiden, kann die Versiegelungsschicht bei Temperaturen oberhalb von 250°C und bevorzugt sogar oberhalb von 270°C ausgehärtet werden. Vorzugsweise findet die Aushärtung bei Temperaturen zwischen 250°C und 330°C statt. Bei Temperaturen oberhalb von 250°C beginnt die Verkieselung der Versiegelungsschicht 20. Wird eine vollständige Verkieselung durch die Aushärtung erreicht, verändert sich der Farbort der Versiegelungsschicht auch bei kurzzeitigen Überhitzungsfällen im späteren Gebrauch nicht mehr.

Gemäß einer besonders bevorzugten Ausführungsform der Erfindung kann die Versiegelungsschicht 20 wie folgt zusammengesetzt sein:

| | |
|---|---|
| 60 - 80 Gew.-% | Polydimethylsiloxan |
| 10 - 40 Gew.-% | Schwarzpigment, insbesondere aus der Gruppe (Cr, Fe) (Ni, Mn)-Spinell, Cu(Cr,Fe,Mn)₂O₄ - Spinell (black 28), Co(Cr,Fe)₂O₄ (black 27) (Ni,Fe) (Cr,Fe)O₄ -Spinell (black 30), (Fe, Mn)₂O₃ (black 33), (Fe, Mn) (Fe, Mn)₂O₄ - Spinell (black 26) oder (Cu, Cr)Oₓ (black 28) |
| 5 - 15 Gew.-% | Graphit mit einem D90-Wert zwischen 5 und 20 µm. (sowohl synthetisch als auch nicht synthetisch) |

Gemäß einer weiteren bevorzugten Ausführungsform der Erfindung kann die Versiegelungsschicht 20 wie folgt zusammengesetzt sein:

| | |
|---|---|
| 60 - 80 Gew.-% | Polydimethylsiloxan |
| 10 - 30 Gew.-% | Weißpigment, insbesondere aus der Gruppe TiO₂-Rutil |
| 5 - 10 Gew.-% | Graphit mit einem D90-Wert zwischen 5 und 20 µm. (sowohl synthetisch als auch nicht synthetisch) |
| 0 - 10 Gew.-% | plättchenförmiges Pigment, beispielsweise Effektpigmente mit einem durchschnittlichen Durchmesser zwischen 5 und 60 µm, z.B. beschichtete und unbeschichtete Glimmerpigmente und/oder SiO₂ und Al₂O₃ basierte Flakes mit TiO₂- und Fe₂O₃-Beschichtung |

Gemäß einer weiteren Ausführungsform der Erfindung kann eine Farbsynthese, die plättchenförmige Pigmente umfasst, beispielsweise folgende Zusammensetzung aufweisen:

| | |
|---|---|
| 60 - 80 Gew.-% | Polydimethylsiloxan |
| 10 - 30 Gew.-% | plättchenförmiges Pigment, beispielsweise Effektpigmente mit einem durchschnittlichen Durchmesser zwischen 5 und 60 µm, z.B. beschichtete und unbeschichtete Glimmerpigmente und/oder SiO₂ und Al₂O₃ |
| | basierte Flakes mit TiO₂- und Fe₂O₃-Beschichtung |

Eine Silikonbeschichtung kann beispielsweise wie folgt hergestellt werden:
Zunächst wird das Silres MK-Pulver abgewogen und in Butylcarbitolacetat gelöst. Dazu wird das Silres MK-Pulver unter Verwendung eines Flügel- oder Dissolverrührers in das mit Entschäumer versetzte Butylcarbitolacetat eingerührt, bis es sich nach etwa 60 Minuten löst. Um eine Kontamination durch Fremdkörper, beispielsweise durch Staubpartikel, zu vermeiden, wird die Lösung durch ein feines Sieb, beispielsweise mit einem 140er Gewebe, gegeben.

Eine Überprüfung des Auflöseverhaltens des Silres MK-Pulvers im Lösungsmittel sowie eine Überprüfung der Homogenität der Lösung kann mittels Ausstreichens der Lösung auf einer Glasplatte erfolgen.

Die so erzeugte Silikonlösung sowie die Pigment-Partikel und gegebenenfalls der Festschmierstoff werden entsprechend der Rezeptur abgewogen. Die Pigment-Partikel und gegebenenfalls der Festschmierstoff werden in den jeweiligen Anteilen zu der Silikonlösung gegeben und dispergiert. Die endgültige Dispergierung und Homogenisierung erfolgt durch mehrmaliges Anreiben in einem 3-Walzen-Stuhl.

Die so erzeugte Beschichtungslösung kann dann über ein Flachbett-Siebdruck-Verfahren auf das Glas- oder Glaskeramik-Substrat aufgebracht werden, wobei das Substrat zuvor gereinigt werden kann (z.B. Standardreinigung mit Waschmaschine oder Handreinigung mit Isopropanol).

Als vorteilhafte Siebstärke hat sich ein 140er Gewebe erwiesen. Je nach Anforderung kann hier aber auch variiert werden.

Die so aufgebrachte Beschichtung wird anschließend bei Temperaturen zwischen 200 und 330°C ausgehärtet oder getrocknet. Insbesondere bevorzugt beträgt die Aushärtungstemperatur zumindest 270°C. Die Einbrandzeit liegt bevorzugt zwischen 30 und 60 Minuten. Wird die Trocknung bei Temperaturen unterhalb von 200°C vorgenommen, können eventuell die für die Verwendung als Kochflächen-Unterseitenbeschichtung benötigten Haftfestigkeiten nicht erreicht werden. Dies schließt jedoch nicht aus, dass eine Trocknung unter 200°C sinnvoll sein kann, wenn der Glas- oder Glaskeramik-Gegenstand mit der dekorativen Beschichtung nicht für Kochflächen-Unterseitenbeschichtungen verwendet werden soll oder wenn zumindest an den Stellen, an denen die Versiegelungsschicht 20 aufgebracht ist, keine Verklebung vorgenommen wird.

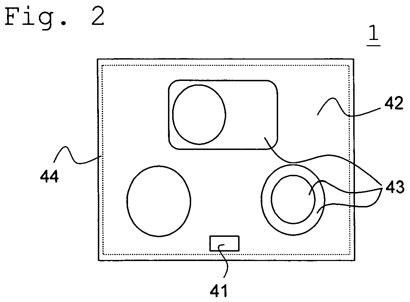

Figur 2 zeigt eine Aufsicht auf einen Glas- oder Glaskeramik-Artikel 1 mit einer dekorativen Beschichtung, der als Kochfläche ausgebildet ist. Die Kochfläche umfasst ein Glaskeramik-Substrat 2 mit einer dekorativen Beschichtung aus Dekor- 10 und Versiegelungsschicht 20. Weder die Dekorschicht 10 noch die Versiegelungsschicht 20 müssen vollflächig aufgetragen sein. Vielmehr können beide Schichten 10, 20 nur Teilbereiche des Substrats 2 bedecken.

Die Dekorschicht 10 ist, mit Ausnahme eines Sensorfelds 41 auf das gesamte Glaskeramik-Substrat 2 aufgebracht. Das Sensorfeld 41 ist ausgespart und kann wahlweise für ein LC-Display ohne Bedruckung bleiben oder auch mit einer semitransparenten Schicht für z.B. 7-Segment-Anzeigen versehen werden.

Die Versiegelungsschicht 20 kann sowohl die "kalten" Bereiche 42 bedecken, als auch zusätzlich die Kochzonen oder die Kochfelder 43 des Glaskeramik-Artikels 1 und ist insbesondere in den Randbereichen 44 vorhanden, an denen die Verklebung mit der Kochmulde erfolgt.

Die Kochfelder 43 können ausschließlich mit einer Dekorschicht 10 oder aber mit einer Kombination aus Dekor-10 und einer Versiegelungsschicht 20 versehen sein. Natürlich können auch verschiedene Rezepturen für die dekorative Beschichtung eines Glas- oder Glaskeramik-Substrats verwendet werden, beispielsweise wenn die Kochfläche Bereiche mit unterschiedlicher Anmutung und/oder Farbe aufweisen soll.

Die Kochfelder 43 können auch in bestimmten Bereichen nur mit der Versiegelungsschicht 20 versehen seien, beispielsweise um dekorative Elemente zu bilden (z.B. dünne Linien etc.).

Die Beschichtung der Kochfläche ist vorzugsweise auf der Unterseite des Glaskeramik-Substrats aufgebracht; sie weist also zum Unterbau des Herdes.

Darüber hinaus muss für eine dekorative Beschichtung gem. Anspruch 1 nicht eine Dekorschicht nach oben beschriebener Zusammensetzung verwendet werden. Es kann grundsätzlich jede Sol-Gel-Beschichtung mit anorganischen Feststoff-Partikeln verwendet werden, die für die jeweilige Anwendung geeignet ist.

Es ist dem Fachmann ersichtlich, dass die Erfindung nicht auf die vorstehend beschriebenen beispielhaften Ausführungsformen beschränkt ist, sondern vielmehr in vielfältiger Weise variiert werden kann.

### Bezugszeichenliste

- 1: Glas- oder Glaskeramik-Artikel
- 2: Glas- oder Glaskeramik-Substrat

- 10: Dekorschicht
- 11: Pigment-Partikel
- 12: Füllstoffe
- 13: Festschmierstoff
- 14: Poren
- 15: Sol-Gel-Matrix, Halbmetall- oder Metalloxid-Netzwerk

- 20: Versiegelungsschicht
- 21: Pigment-Partikel
- 23: Festschmierstoff
- 25: Silikon-basierte Matrix

- 31: Bereich mit Dekor- und Versiegelungsschicht
- 32: Bereich mit Dekorschicht
- 33: Bereich ohne dekorative Beschichtung
- 34: Bereich mit Versiegelungsschicht

- 41: Sensorfeld
- 42: nicht beheizte, "kalte" Bereiche der Kochfläche
- 43: Heizzonen
- 44: Randbereich des Kochfelds

## Patentansprüche

1. Glas- oder Glaskeramik-Artikel (1) mit dekorativer Beschichtung, umfassend
- ein Glas- oder Glaskeramik-Substrat (2) mit
- einer Dekorschicht (10) und
- einer Versiegelungsschicht (20), wobei
die Dekorschicht (10) zumindest teilflächig auf das Glas- oder Glaskeramik-Substrat (2) aufgebracht ist und
die Versiegelungsschicht (20) zumindest auf Teilbereichen der Dekorschicht (10) und/oder dem Glas- oder Glaskeramik-Substrat (2) aufgebracht ist, und wobei
die Dekorschicht (10) eine ausgehärtete Sol-Gel-Beschichtung mit anorganischen Feststoff-Partikeln (11, 12, 13)
und
die Versiegelungsschicht (20) eine ausgehärtete Beschichtung auf Silikon-Basis mit anorganischen Feststoff-Partikeln (21, 23) umfasst, **dadurch gekennzeichnet, dass** der Anteil der anorganischen Feststoff-Partikel der Versiegelungsschicht (20) zwischen 10 und 70 Gew.-%, bevorzugt zwischen 20 und 50 Gew.-% und besonders bevorzugt zwischen 30 und 40 Gew.-% am Gesamtgewicht der Versiegelungsschicht (20) ausmacht, und als Feststoff-Partikel zumindest Pigment-Partikel (21) in der Versiegelungsschicht (20) enthalten sind und wobei die innere Porosität der pigmentierten Versiegelungsschicht <30m²/g, besonders bevorzugt <20m²/g, insbesondere bevorzugt <10m²/g beträgt.

2. Glas- oder Glaskeramik-Artikel (1) nach Anspruch 1, **dadurch gekennzeichnet, dass** die anorganischen Feststoff-Partikel Pigment-Partikel (11, 21) und/oder Füllstoffe (12) und gegebenenfalls Festschmierstoff (13, 23) umfassen.

3. Glas- oder Glaskeramik-Artikel (1) nach Anspruch 2, **dadurch gekennzeichnet, dass** die Dekorschicht (10) als ausgehärtetes Sol-Gel-Bindemittel (15) ein Metalloxid-Netzwerk, bevorzugt ein SiO₂-Netzwerk umfasst, wobei das Netzwerk anorganische Partikel in einem Verhältnis der Gewichtsprozente von Pigment-Partikeln (11) und/oder Füllstoff (12) zu Festschmierstoff (13) zwischen 10:1 bis 1:1 enthält.

4. Glas- oder Glaskeramik-Artikel (1) nach einem der Ansprüche 2 oder 3, **dadurch gekennzeichnet, dass** der Festschmierstoff (13) Graphit und/oder α-Bornitrid und/oder Molybdän-Sulfid umfasst.

5. Glas- oder Glaskeramik-Artikel (1) nach einem der Ansprüche 2 bis 4, **dadurch gekennzeichnet, dass** die Versiegelungsschicht (20) als Pigment-Partikel (21) Schwarzpigmente, insbesondere Spinelle und/oder Effektpigmente, insbesondere plättchenförmige Pigmente und gegebenenfalls Festschmierstoff (23) umfasst.

6. Glas- oder Glaskeramik-Artikel (1) nach einem der Ansprüche 4 bis 5, **dadurch gekennzeichnet, dass** die dekorative Beschichtung einen L*-Wert zwischen 2 und 30, bevorzugt zwischen 2 und 25 und besonders bevorzugt zwischen 2 und 20 oder einen L*-Wert zwischen 65 und 98, bevorzugt zwischen 70 und 98 und besonders bevorzugt zwischen 80 und 98, gemessen durch das Glas- oder Glaskeramik-Substrat (2) hindurch, aufweist.

7. Verfahren zur Herstellung eines Glas- oder Glaskeramik-Artikels (1) mit dekorativer Beschichtung, umfassend eine Dekorschicht (10) und eine Versiegelungsschicht (20), wobei
- zunächst die Dekorschicht (10) auf Sol-Gel-Basis aufgebracht wird, wobei einem Sol anorganische Feststoff-Partikel zugegeben werden, die Mischung aus dem Sol und den anorganischen Feststoff-Partikeln zumindest teilflächig auf ein Glas- oder Glaskeramik-Substrat (2) aufgebracht und unter Ausbildung einer Dekorschicht (10) ausgehärtet wird und anschließend
- die Versiegelungsschicht (20) zumindest auf Teilbereiche der Dekorschicht (10) und/oder des Glas- oder Glaskeramik-Substrats (2) aufgebracht wird, wobei einer Beschichtungslösung auf Silikon-Basis Feststoff-Partikel zugegeben werden, die entstandene Mischung auf das mit der Dekorschicht (10) beschichtete Glas- oder Glaskeramik-Substrat (2) aufgebracht und ausgehärtet wird, wobei der Anteil der anorganischen Feststoff-Partikel der Versiegelungsschicht (20) zwischen 10 und 70 Gew.-%, bevorzugt zwischen 20 und 50 Gew.-% und besonders bevorzugt zwischen 30 und 40 Gew.-% am Gesamtgewicht der Versiegelungsschicht (20) ausmacht, und als Feststoff-Partikel zumindest Pigment-Partikel (21) in der Versiegelungsschicht (20) enthalten sind und wobei die innere Porosität der pigmentierten Versiegelungsschicht <30m²/g, besonders bevorzugt <20m²/g, insbesondere bevorzugt <10m²/g beträgt.

8. Verfahren nach Anspruch 7, **dadurch gekennzeichnet, dass** als anorganische Feststoff-Partikel Pigment-Partikel (11, 21) und/oder Füllstoffe (12) und gegebenenfalls Festschmierstoff (13, 23) zugegeben werden.

9. Verfahren nach Anspruch 7 oder 8, **dadurch gekennzeichnet, dass** zur Herstellung der Dekorschicht (10) dem Sol anorganische Feststoff-Partikel in einem Verhältnis der Gewichtsprozente von Pigment-Partikeln (11) und/oder Füllstoffen (12) zu Festschmierstoff (13) von 10:1 bis 1:1 zugegeben werden.

10. Verfahren nach einem der Ansprüche 7 bis 9, **dadurch gekennzeichnet, dass** als Versiegelungsschicht (20) eine Polysiloxan umfassende Beschichtung, eine Polysilsesquioxan umfassende Beschichtung oder eine Beschichtung aus einer Mischung von Polysiloxan und Polysilsesquioxan aufgebracht wird.

11. Verfahren nach einem der Ansprüche 7 bis 10, **dadurch gekennzeichnet, dass** der Versiegelungsschicht (20) als Pigment-Partikel (21) Schwarzpigmente, insbesondere Spinelle und/oder Effektpigmente, insbesondere plättchenförmige Pigmente zugegeben werden und gegebenenfalls als Festschmierstoff (23) vorzugsweise Graphit zugegeben wird.

12. Verfahren nach einem der Ansprüche 7 bis 11, **dadurch gekennzeichnet, dass** die Versiegelungsschicht (20) durch Trocknen bei Temperaturen größer 200°C erhalten wird.

13. Verwendung eines Glas- oder Glaskeramik-Artikels (1) nach einem der Ansprüche 1 bis 6 als Kochfläche, wobei die dekorative Beschichtung insbesondere auf der Unterseite der Kochfläche aufgebracht ist.

## Claims

1. A glass or glass ceramic article (1) having a decorative coating, comprising:
- a glass or glass ceramic substrate (2) with
- a decoration layer (10), and
- a sealing layer (20); wherein
the decoration layer (10) is applied to at least some surface portions of the glass or glass ceramic substrate (2); and
the sealing layer (20) is applied to at least portions of the decoration layer (10) and/or of the glass or glass ceramic substrate (2); and wherein
the decoration layer (10) is a cured sol-gel coating that includes inorganic solid particles (11,12,13); and
the sealing layer (20) is a cured silicone-based coating that includes inorganic solid particles (21, 23);
**characterized in that** the proportion of the inorganic solid particles of the sealing layer (20) is between 10 and 70 wt%, preferably between 20 and 50 wt%, and most preferably between 30 and 40 wt% of the total weight of the sealing layer (20); and that the solid particles included in the sealing layer (20) comprise at least pigment particles (21); and that the inner porosity of the pigmented sealing layer is <30 m²/g, more preferably <20 m²/g, most preferably <10 m²/g,

2. The glass or glass ceramic article (1) according to claim 1,
**characterized in that** the inorganic solid particles comprise pigment particles (11, 21) and/or fillers (12) and optionally solid lubricant (13, 23).

3. The glass or glass ceramic article (1) according to claim 2,
**characterized in that** the decoration layer (10) comprises a metal oxide network, preferably a SiO₂ network, as a cured sol-gel binder (15), wherein the network includes inorganic particles in a ratio of weight percentages of pigment particles (11) and/or filler (12) to solid lubricant (13) between 10:1 and 1:1.

4. The glass or glass ceramic article (1) according to any one of claims 2 or 3,
**characterized in that** the solid lubricant (13) comprises graphite and/or α-boron nitride and/or molybdenum sulfide.

5. The glass or glass ceramic article (1) according to any one of claims 2 to 4,
**characterized in that** the sealing layer (20) comprises black pigments, in particular spinels and/or effect pigments, especially platelet-shaped pigments as the pigment particles (21), and optionally solid lubricant (23).

6. The glass or glass ceramic article (1) according to any one of claims 4 or 5,
**characterized in that** the decorative coating has an L* value between 2 and 30, preferably between 2 to 25, and most preferably between 2 and 20; or an L* value between 65 and 98, preferably between 70 and 98, and most preferably between 80 and 98, measured through the glass or glass ceramic substrate (2).

7. A method for producing a glass or glass ceramic article (1) having a decorative coating that comprises a decoration layer (10) and a sealing layer (20), wherein
- first, the decoration layer (10) is applied on a sol-gel basis, by adding inorganic solid particles to a sol, applying the mixture of said sol and said inorganic solid particles to at least some surface portions of a glass or glass ceramic substrate (2), and curing to form a decoration layer (10); and then
- the sealing layer (20) is applied to at least portions of the decoration layer (10) and/or of the glass or glass ceramic substrate (2) by adding solid particles to a silicone-based coating solution, applying the resulting mixture to the glass or glass ceramic substrate (2) coated with the decoration layer (10), and curing;
wherein the proportion of the inorganic solid particles of the sealing layer (20) is between 10 and 70 wt%, preferably between 20 and 50 wt%, and most preferably between 30 and 40 wt% of the total weight of the sealing layer (20), and the solid particles included in the sealing layer (20) comprise at least pigment particles (21), and wherein the inner porosity of the pigmented sealing layer is <30 m²/g, more preferably <20 m²/g, most preferably <10 m²/g.

8. The method according to claim 7, **characterized in that** pigment particles (11, 21) and/or fillers (12) are added as the inorganic solid particles, and optionally solid lubricant (13, 23).

9. The method according to claim 7 or 8, **characterized in that** for preparing the decoration layer (10), inorganic solid particles are added to the sol in a ratio of weight percentages of pigment particles (11) and/or fillers (12) to solid lubricant (13) ranging from 10:1 to 1:1.

10. The method according to any one of claims 7 to 9, **characterized in that** a polysiloxane comprising coating, a polysilsesquioxane comprising coating or a coating comprising of a mixture of polysiloxane and polysilsesquioxane is applied as the sealing layer (20).

11. The method according to any one of claims 7 to 10, **characterized in that** black pigments are added to the sealing layer (20) as the pigment particles (21), in particular spinels and/or effect pigments, especially platelet-like pigments, and that, optionally, preferably graphite is added as a solid lubricant (23).

12. The method according to any one of claims 7 to 11, **characterized in that** the sealing layer (20) is obtained by drying at temperatures above 200 °C.

13. Use of a glass or glass ceramic article (1) according to any one of claims 1 to 6 as a cooktop, wherein the decorative coating is in particular applied on the underside of the cooktop.

## Revendications

1. Article en verre ou en vitrocéramique (1) comportant un revêtement décoratif, comprenant
- un substrat en verre ou en vitrocéramique (2), comportant
- une couche décorative (10) et
- une couche de scellement (20), dans lequel
la couche décorative (10) est appliquée au moins partiellement sur le substrat en verre ou en vitrocéramique (2), et
la couche de scellement (20) est appliquée au moins sur des zones partielles de la couche décorative (10) et/ou sur le substrat en verre ou en vitrocéramique (2), et dans lequel
la couche décorative (10) comprend un revêtement sol-gel durci, comportant des particules solides inorganiques (11, 12, 13)
et
la couche de scellement (20) comporte un revêtement durci à base de silicone, comportant des particules solides inorganiques (21, 23), **caractérisé en ce que** la proportion des particules solides inorganiques dans la couche de scellement (20) représente 10 à 70 % en poids, de préférence de 20 à 50 % en poids et d'une manière particulièrement préférée de 30 à 40 % en poids du poids total de la couche de scellement (20), et la couche de scellement (20) contient en tant que particules solides au moins des particules pigmentaires (21), et dans lequel la porosité interne de la couche de scellement pigmentée est < 30 m²/g, d'une manière particulièrement préférée < 20 m²/g, d'une manière tout particulièrement préférée < 10 m²/g.

2. Article en verre ou en vitrocéramique (1) selon la revendication 1, **caractérisé en ce que** les particules solides inorganiques comprennent des particules pigmentaires (11, 21) et/ou des charges (12) et éventuellement un lubrifiant solide (13, 23) .

3. Article en verre ou en vitrocéramique (1) selon la revendication 2, **caractérisé en ce que** la couche décorative (10) comprend en tant que liant sol-gel durci (15) un réseau d'oxyde métallique, de préférence un réseau de SiO₂, le réseau contenant des particules inorganiques selon un rapport entre le pourcentage en poids des particules pigmentaires (11) et/ou de la charge (12) et celui du lubrifiant solide (13) compris entre 10:1 et 1:1.

4. Article en verre ou en vitrocéramique (1) selon l'une des revendications 2 ou 3, **caractérisé en ce que** le lubrifiant solide (13) comprend du graphite et/ou du nitrure de bore α et/ou du sulfure de molybdène.

5. Article en verre ou en vitrocéramique (1) selon l'une des revendications 2 à 4, **caractérisé en ce que** la couche de scellement (20) comprend en tant que particules pigmentaires (21) des pigments noirs, en particulier des spinelles et/ou des pigments à effets, en particulier des pigments lamellaires et éventuellement un lubrifiant solide (23).

6. Article en verre ou en vitrocéramique (1) selon l'une des revendications 4 à 5, **caractérisé en ce que** le revêtement décoratif présente une valeur L* comprise entre 2 et 30, de préférence entre 2 et 25 et d'une manière particulièrement préférée entre 2 et 20, ou une valeur L* comprise entre 65 à 98, de préférence entre 70 et 98 et d'une manière particulièrement préférée entre 80 et 98, mesurée à travers le substrat en verre ou en vitrocéramique (2).

7. Procédé de fabrication d'un article en verre ou en vitrocéramique (1) comportant un revêtement décoratif, comprenant une couche décorative (10) et une couche de scellement (20), dans lequel
- on applique d'abord la couche décorative (10) sur une base sol-gel, ce pour quoi on ajoute à un sol des particules solides inorganiques, on applique le mélange du sol et des particules solides inorganiques au moins partiellement sur un substrat en verre ou en vitrocéramique (2), et on le durcit avec formation d'une couche décorative (10), puis
- on applique la couche de scellement (20) au moins sur des zones partielles de la couche décorative (10) et/ou du substrat en verre ou en vitrocéramique (2), ce pour quoi on ajoute une solution de revêtement sur les particules solides à base de silicium, on applique le mélange ainsi obtenu sur le substrat en verre ou en vitrocéramique (2) revêtu de la couche décorative (10), et on le durcit, la proportion des particules solides inorganiques dans la couche de scellement (20) représentant de 10 à 70 % en poids, de préférence de 20 à 50 % en poids et d'une manière particulièrement préférée de 30 à 40 % en poids du poids total de la couche de scellement (20), la couche de scellement (20) contenant en tant que particules solides au moins des particules pigmentaires (21), et la porosité interne de la couche de scellement pigmentée étant < 30 m²/g, d'une manière particulièrement préférée < 20 m²/g, d'une manière particulièrement préférée < 10 m²/g.

8. Procédé selon la revendication 7, **caractérisé en ce qu'**on ajoute en tant que particules solides inorganiques des particules pigmentaires (11, 21) et/ou des charges (12) et éventuellement un lubrifiant solide (13, 23).

9. Procédé selon la revendication 7 ou 8, **caractérisé en ce que**, pour la fabrication de la couche décorative (10), on ajoute au sol des particules solides inorganiques selon un rapport entre le pourcentage en poids des particules pigmentaires (11) et/ou de charges (12) et celui du lubrifiant solide (13) de 10:1 à 1:1.

10. Procédé selon l'une des revendications 7 à 9, **caractérisé en ce qu'**on applique en tant que couche de scellement (20) un revêtement comprenant du polysiloxane, un revêtement comprenant du polysilsesquioxane ou un revêtement constitué d'un mélange de polysiloxane et de polysilsesquioxane.

11. Procédé selon l'une des revendications 7 à 10, **caractérisé en ce qu'**on ajoute à la couche de scellement (20) en tant que particules pigmentaires (21) des pigments noirs, en particulier des spinelles et/ou des pigments à effets, en particulier des pigments lamellaires, et éventuellement on ajoute en tant que lubrifiant solide (23) de préférence du graphite.

12. Procédé selon l'une des revendications 7 à 11, **caractérisé en ce que** la couche de scellement (20) est obtenue par séchage à des températures supérieures à 200°C.

13. Utilisation d'un article en verre ou en vitrocéramique (1) selon l'une des revendications 1 à 6 en tant que plaque de cuisson, la couche décorative étant appliquée en particulier sur la face inférieure de la plaque de cuisson.
